(19)

**Europäisches Patentamt**
**European Patent Office**
**Office européen des brevets**

(11) **EP 4 734 327 A1**

(12) **EUROPEAN PATENT APPLICATION**

(43) Date of publication:
29.04.2026 Bulletin 2026/18

(21) Application number: 24209045.4

(22) Date of filing: 25.10.2024

(51) International Patent Classification (IPC):
**H02J 13/00** (2026.01)

(52) Cooperative Patent Classification (CPC):
**H02J 13/12; H02J 13/14;** H02J 2103/35

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Hitachi Energy Ltd**
**8050 Zürich (CH)**

(72) Inventors:
• **SHCHETININ, Dmitry**
**5600 Lenzburg (CH)**
• **LARSSON, Mats**
**5102 Rupperswil (CH)**
• **NUQUI, Reynaldo**
**Cary, 27513 (US)**

(74) Representative: **Vossius & Partner**
**Patentanwälte Rechtsanwälte mbB**
**Siebertstraße 3**
**81675 München (DE)**

(54) **METHOD AND DEVICE FOR DETERMINING A STATUS OF A POWER GRID**

(57) The present disclosure relates to a method for determining a status of a power grid, wherein the power grid comprises a plurality of branches each connected between two buses. The method comprises obtaining current measurements of at least one of the plurality of branches, obtaining a grid model, the model comprising the plurality of branches and buses, estimating, using the grid model and the current measurements, a voltage value of at least one of the plurality of buses, determining, using the voltage values and current measurements, current estimates of remaining branches of the plurality of branches having an unknown status and determining the status of the remaining branches of the plurality of branches based on the estimated currents.

S11 obtaining current measurements of at least one of the plurality of branches

↓

S12 obtaining a grid model, the model comprising the plurality of branches and buses

↓

S13 estimating, using the grid model and the current measurements, a voltage value of at least one of the plurality of buses

↓

S14 determining, using the voltage values and current measurements, current estimates of remaining branches of the plurality of branches having an unknown status

↓

S15 determining the status of the remaining branches of the plurality of branches based on the estimated currents

Fig. 1

EP 4 734 327 A1

**Description**

The present disclosure relates to a method and device for determining a status of a power grid. In particular, the present disclosure relates to determining a status of branches in the grid.

Topology estimation, which may refer to determination of the statuses ("on" or "off") of branches in the grid model, is part and parcel of grid monitoring and control. It can be useful in its own right to increase the system operator awareness of the grid's current operational characteristics, as well as serve as an input to advanced applications such as security analysis, optimal power flow, state estimation, etc.

Power grid topology detection may refer to the process of identifying the structure of a power grid, including the connections between various components. This may be a crucial task for power grid operators, as it enables them to monitor the grid's performance, detect faults, and take corrective actions in a timely manner. The topology of a power grid can change frequently due to various factors such as equipment failures, maintenance activities, operator-initiated switching actions, etc. Therefore, it is essential to have accurate and up-to-date information about the grid's topology to ensure its safe and reliable operation. One particularly important application of grid topology detection is state estimation, which determines the most likely state of the powergrid based on available measurements. To ensure high accuracy of the state estimation procedure, correct topology must be supplied to it as the input. While statuses of branches in the grid model (power lines and transformers) are typically monitored and available in a SCADA (supervisory control and data acquisition) system, their values might be erroneous. A number of approaches have been proposed over the years to detect and identify wrong branch statuses as part of the state estimation procedure, from using residuals or Lagrange multipliers of the measurement equations, to hypothesis testing and fuzzy logic. These methods can provide a better topology estimate but fail to address another fundamental problem limiting the accuracy of the traditional state estimation, namely, the fact that measurements are not time-synchronised. In addition, traditional state estimation has a relatively slow update rate (once every few seconds or minutes), which limits its applicability to steady-state analysis and control.

Increasing proliferation of PMUs now makes it possible to solve the state estimation problem based on the time-synchronised PMU measurements, which means that the solution update rate can reach dozens of times per second. This not only increases the accuracy of the resulting estimate but also serves as a technological enabler for advanced grid control applications. Naturally, the correct topology estimate is required also for this state estimation to work properly. The main problem here is that only the statuses of PMU-monitored branches are directly available and trustworthy. Since it is unlikely that PMUs will be installed on every branch in the system due to their high cost, statuses of unmonitored branches must be determined through other means. While the topology information from SCADA could be used here as well, the update rate of this system is significantly lower than the update rate of PMU measurements. This means that PMU-based state estimation might rely on not up-to-date information of the SCADA-based grid topology, thus making the results potentially inaccurate, which in turn negatively impacts the performance of advanced grid control applications. Existing works on detecting grid topology using PMU measurements typically focus on local (e.g., detecting the outage of a particular line) rather than grid-wide approaches. Hence, there remains the need for scalable approaches for real-time topology detection based on the available set of PMU measurements.

This need is met with the features of the present disclosure. The invention is defined in the independent claims. Dependent claims describe preferred embodiments.

The present disclosure relates to a method for determining a status of a power grid, wherein the power grid comprises a plurality of branches each connected between two buses. The method comprises obtaining current measurements of at least one of the plurality of branches, obtaining a grid model, the model comprising the plurality of branches and buses, estimating, using the grid model and the current measurements, a voltage value of at least one of the plurality of buses, determining, using the voltage values and current measurements, current estimates of remaining branches of the plurality of branches having an unknown status and determining the status of the remaining branches of the plurality of branches based on the estimated currents.

Various embodiments may preferably implement the following features.

Preferably, the status comprises whether a branch is active or inactive, wherein preferably, the status is a binary variable.

Preferably, each branch comprises a first end and a second end connected to respective buses.

Preferably, in case voltage values at the first end and the second end of one of the remaining branches are known, the status of said remaining branch is determined based on a current which is determined assuming said remaining branch is active.

Preferably, the status of the remaining branch is determined to be active if the ratio is above a first threshold, and/or wherein the remaining branch is determined to be inactive if the ratio is below a second threshold.

Preferably, in case a voltage value of the first end or the second end of one of the remaining branches is unknown, the status of said remaining branch is determined based on an absolute value of the estimated current of said remaining branch.

Preferably, the remaining branch is determined to be active if the absolute current value is above a third threshold.

Preferably, estimating the estimated currents of the remaining branches of the plurality of branches is performed assuming an active status of the remaining branches.

Preferably, determining the statuses of the remaining branches is based on a linear state estimation.

Preferably, determining the statuses of the remaining branches comprises minimising current mismatches for all buses to which at least one remaining branch is connected, respectively,
wherein preferably, the minimising is performed based on Kirchhoff's current law.

Preferably, determining the statuses of the remaining branches comprises a sum of squares optimisation.

Preferably, the method further comprises determining, based on the voltage and current values of the at least one of the plurality of branches, current and voltage values of one adjacent remaining branch connected to the at least one of the plurality of branches.

Preferably, the method further comprises iteratively performing determination of current and voltage values of further adjacent remaining branches based on the current and voltage values of said adjacent remaining branch. Preferably, the step is performed before determining the current estimates of the remaining branches of the plurality of branches.

Preferably, the method is computer-implemented.

Preferably, the method further comprises generating, based on said determined status, a control signal for controlling the power grid.

The present disclosure further relates to a device for determining a status of a power grid, the device comprising at least one processor configured to perform the method as described above.

The present disclosure also relates to a computer-readable storage medium storing instructions which, when executed by a processor, configure the processor to perform the method as described above.

In a further aspect, the present disclosure relates to a method for determining a status of a power grid, wherein the power grid comprises a plurality of branches each connected between two buses. The method comprises obtaining current measurements of at least one of the plurality of branches, obtaining a grid model, the model comprising the plurality of branches and buses, estimating, using the grid model and the current measurements, a voltage value of at least one of the plurality of buses, obtaining, from a controller, at least one parameter of at least one of remaining branches of the plurality of branches, determining, based on the at least one parameter and current measurements of the at least one of the plurality of branches, currents of the remaining branches of the plurality of branches and determining or correcting the status of the remaining branches of the plurality of branches based on the estimated currents.

Various embodiments may preferably implement the following features.

Preferably, the status comprises whether a branch is active or inactive.

Preferably, each branch comprises a first end and a second end connected to respective buses.

Preferably, the remaining branch is determined to be active if a ratio between the estimated current and an active current assuming the remaining branch is active is above a first threshold and/or wherein the remaining branch is determined to be inactive if the ratio is below a second threshold.

Preferably, estimating the estimated currents of the remaining branches of the plurality of branches is performed assuming an active status of the remaining branches.

Preferably, determining the statuses of the remaining branches is based on a linear state and topology estimation.

Preferably, determining the statuses of the remaining branches comprises minimising current mismatches for all buses to which at least one remaining branch is connected, respectively.

Preferably, the minimising is performed based on Kirchhoff's current law.

Preferably, determining the statuses of the remaining branches comprises a sum of squares optimisation.

Preferably, the method further comprises determining, based on the voltage and current values of the at least one of the plurality of branches, current and voltage values of one adjacent remaining branch connected to the at least one of the plurality of branches.

Preferably, the method further comprises iteratively performing determination of current and voltage values of further adjacent remaining branches based on the current and voltage values of said adjacent remaining branch. Preferably, the step is performed before estimating the currents of the remaining branches of the plurality of branches.

Preferably, the controller is a supervisory control and data acquisition, SCADA, system.

Preferably, the method is computer-implemented.

Preferably, the method further comprises generating, based on said determined status, a control signal for controlling the power grid.

The present disclosure further relates to a device for determining a status of a power grid, the device comprising at least one processor configured to perform the method as described above.

The present disclosure also relates to a computer-readable storage medium storing instructions which, when executed by a processor, configure the processor to perform the method as described above.

The present disclosure will be further described with reference to the accompanying drawings. Therein, the same or the like elements are denoted by the same or similar reference numerals.

Fig. 1 shows a flowchart of a method according to an embodiment of the present disclosure.

Fig. 2 shows a flowchart of a method according to an embodiment of the present disclosure.

Fig. 3 shows a two-port branch model.

Fig. 4 shows an example of propagating branch status observability through the network graph according to an embodiment of the present disclosure.

Fig. 5A shows a simplified schematic model according to an embodiment of the present disclosure and Fig. 5B shows a simplified bus structure according to an embodiment of the present disclosure.

Fig. 6 shows a schematic depiction of an equivalent circuit according to an embodiment of the present disclosure.

Fig. 7A shows a simplified bus structure according to an embodiment of the present disclosure and Fig. 7B shows a simplified equivalent circuit according to an embodiment of the present disclosure.

Fig. 8 shows a simplified bus structure according to an embodiment of the present disclosure.

According to the present disclosure, a new approach is presented for detecting the operating topology of a power grid based on current and voltage measurements, preferably time-synchronised measurements. These measurements may originate from, e.g., one or more Phasor Measurement Units (PMUs) as well as knowledge of the grid model. If available, branch statuses from SCADA can be used as an extra input to the estimation procedure. Thus, the present disclosure provides the user the possibility to choose between the following types of topology estimation depending on the preference and available data.

The topology may be traced through a power system graph.

The topology may be obtained only based on available PMU measurements and knowledge of the grid model by solving a combined state and topology estimation problem.

The topology may be obtained based on available PMU measurements, knowledge of the grid model, and topology estimate from SCADA by solving a combined state and topology estimation problem.

Tracing the topology through a power system graph can also be used as a pre-processing step for the other methods.

The presented solution is a method and corresponding device and computer-readable storage medium for estimating the operational topology of the power grid. It may be implemented as a software tool. Its inputs may be (time-synchronised) phasor measurements of voltages and currents, and the grid model (parameters of power lines and transformers, and the structural topology, i.e., what can be connected to what). Optionally, the method uses branch statuses coming from SCADA, but due to their comparatively lower update rate they are treated as an initial guess for the actual statuses rather than the ground truth.

The solution algorithms are based on graph tracing and convex optimisation, which ensure scalability and reliable performance. In addition to the statuses, corresponding confidence values may be computed, making it easier for the user to assess the trustworthiness of the obtained topology estimate.

More particular, the presented methods aim at determining the statuses of branches in the power grid branch-bus model. They therefore do not identify the status of each individual circuit breaker at a substation. However, the method(s) could be extended to also include more detailed substation busbar models and identify statuses of shunt elements such as capacitor banks, reactors, etc. The proposed topology estimation can also be used as part of other advanced applications or as a standalone module.

In an embodiment, the method relies on the following input data. Phasor measurements, in particular time-synchronised phasor measurements, of bus voltages and branch (line and transformer) and shunt (capacitor, reactor, load, generator, etc.) currents, such as those coming from PMUs. Note that only a single snapshot rather than the timeseries is required, which makes the proposed topology detection a real-time approach. Further, a grid model of the power grid, which includes the steady-state parameters of the equipment (e.g., branch impedances) and the structural topology, i.e., which elements are connected to each other, may be provided as an input.

Optionally, statuses of branches coming from the SCADA system are used as a further input.

The possible methods may have the following advantages and disadvantages. Using PMU measurements, a fast and reliable detection of the monitored branches can be achieved but the status of unmonitored branches cannot be detected. Due to costs and complexity, generally only a fraction of the branches is monitored by PMUs. By using SCADA data, all statuses may be known, but since the data is not updated in real-time, erroneous results may be obtained. Using a graph tracing method is reliable for "on" statuses but cannot recover all statuses of the grid. Using a graph and optimisation-based technique, all statuses may be recovered, but said method is more susceptible to noise.

Thus, using statuses from PMUs or SCADA is not sufficient for obtaining an accurate result because PMUs are not installed on every branch in the grid and SCADA information does not have sufficiently high update rate. To address this problem, the following three topology detection methods are presented as exemplary embodiments.

Method 1 is based on graph tracing. It uses current bus balances based on Kirchhoff's current law to determine the status of branches that are not directly PMU monitored. It then iteratively propagates the knowledge on the branch statuses through the graph of the grid until no more statuses can be determined. This method may be the fastest one and works best when majority of bus current injections are known, which can happen when many buses have zero injections or when nonzero injections coming from loads and generators are monitored with PMUs. The advantage of this method is that it can be tuned to be extremely reliable for detecting branches that are in-service. The downside is that for an arbitrary PMU placement it cannot recover all branch statuses because of the limitations of the graph tracing procedure.

Method 2 is based on solving an optimisation problem for determining the unknown branch statuses. The idea is to find the statuses of branches that would result in the best fit of the measurement data to the measurement equations such as bus balance equations. This method may be able recover virtually all branch statuses even for moderate PMU penetration rate, but it tends to perform better when the measurement noise is limited. It does not rely on any SCADA data.

Method 3 is based on solving a joint state estimation and topology detection problem. Similar to Method 2, the idea is to find the statuses of branches that would result in the best fit of the measurement data to the measurement equations such as bus balance equations. The main differences to Method 2 are that a) it may utilise branch statuses from SCADA as the "initial guess", and b) all bus voltages may be treated as variables in the optimisation problem. This method could also recover virtually all branch statuses even for moderate PMU penetration rate, and it can benefit considerable from the known SCADA statuses provided that a majority of them are correct, which is typically the case in practice.

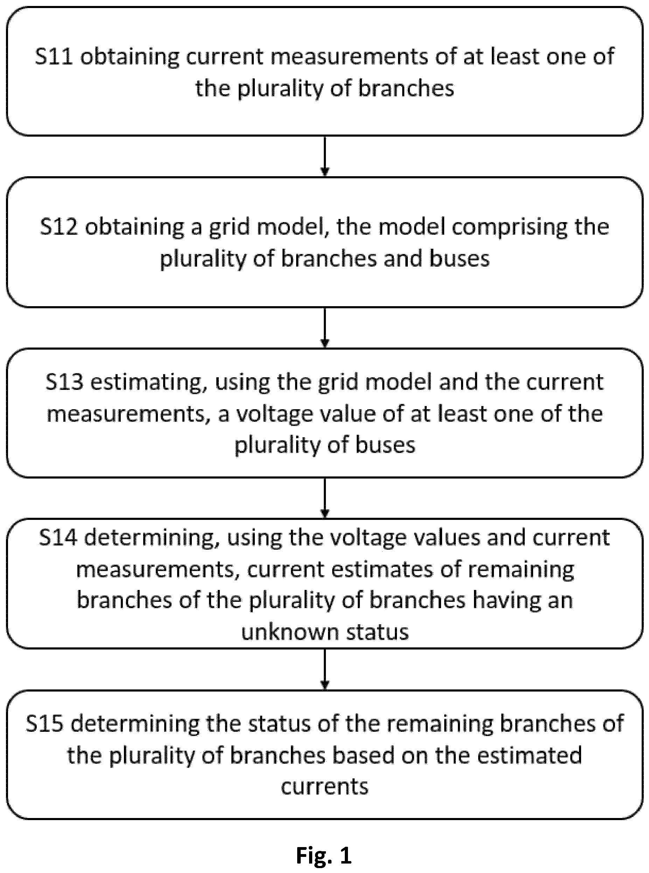

Fig. 1 shows a flow chart of an embodiment according to the present disclosure (method 2). The shown method for determining a status of a power grid, wherein the power grid comprises a plurality of branches each connected between two buses, comprises obtaining S11 current measurements of at least one of the plurality of branches, obtaining S12 a grid model, the model comprising the plurality of branches and buses, estimating S13, using the grid model and the current measurements, a voltage value of at least one of the plurality of buses, determining S14, using the voltage values and current measurements, current estimates of remaining branches of the plurality of branches having an unknown status and determining S15 the status of the remaining branches of the plurality of branches based on the estimated currents.

In an embodiment, the status comprises whether a branch is active or inactive, wherein preferably, the status is a binary variable.

In an embodiment, each branch comprises a first end and a second end connected to respective buses. In an embodiment, in case voltage values at the first end and the second end of one of the remaining branches are known, the status of said remaining branch is determined based on a current which is determined assuming said remaining branch is active.

In an embodiment, the status of the remaining branch is determined to be active if the ratio is above a first threshold, and/or wherein the remaining branch is determined to be inactive if the ratio is below a second threshold.

That is, in an embodiment, a factors is used and multiplied with a constant current which was precomputed assuming the branch was in service. The actual value of s can be determined from an optimisation problem as further described below. I.e., for every branch with known voltages at both ends a current $I_{br}$ assuming the branch is on is determined. Then, its actual current is defined to be s $I_{br}$, where s is the variable and $I_{br}$ is constant. Subsequently, s $I_{br}$ may be added to the corresponding bus balance equation(s). The optimisation problem is then configured to adjust the values of s such that the bus balance mismatches are minimised.

In an embodiment, in case a voltage value of the first end or the second end of one of the remaining branches is unknown, the status of said remaining branch is determined based on an absolute value of the estimated current of said remaining branch. In an embodiment, the remaining branch is determined to be active if the absolute current value is above a third threshold.

In an embodiment, estimating the estimated currents of the remaining branches of the plurality of branches is performed assuming an active status of the remaining branches. In an embodiment, determining the statuses of the remaining branches is based on a linear state estimation. In an embodiment, determining the statuses of the remaining branches comprises minimising current mismatches for all buses to which at least one remaining branch is connected, respectively. In an embodiment, the minimising is performed based on Kirchhoff's current law.

In an embodiment, determining the statuses of the remaining branches comprises a sum of squares optimisation.

In an embodiment, the method further comprises determining, based on the voltage and current values of the at least one of the plurality of branches, current and voltage values of one adjacent remaining branch connected to the at least one of the plurality of branches (method 1).

In an embodiment, the method further comprises iteratively performing determination of current and voltage values of further adjacent remaining branches based on the current and voltage values of said adjacent remaining branch. In an embodiment, said step is performed before determining the current estimates of the remaining branches of the plurality of branches.

The method may be computer-implemented.

In an embodiment, the method further comprises generating, based on said determined status, a control signal for controlling the power grid.

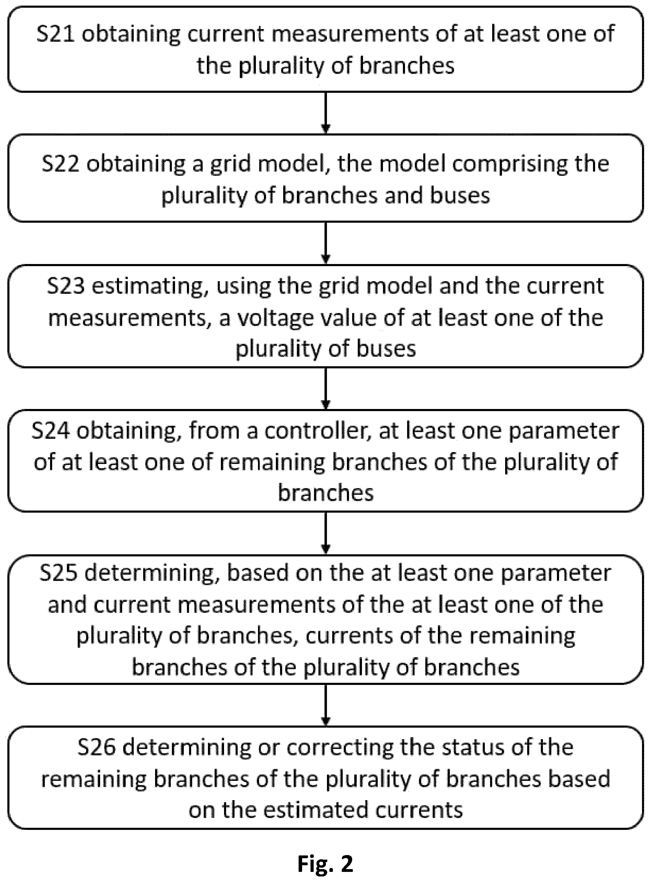

Further, according to an embodiment shown in Fig. 2 (method 3), the present disclosure relates to a method for determining a status of a power grid, wherein the power grid comprises a plurality of branches each connected between two buses. The method comprises obtaining S21 current measurements of at least one of the plurality of branches, obtaining S22 a grid model, the model comprising the plurality of branches and buses, estimating S23, using the grid model and the current measurements, a voltage value of at least one of the plurality of buses, obtaining S24, from a controller, at least one parameter of at least one of remaining branches of the plurality of branches, determining S25, based on the at least one parameter and current measurements of the at least one of the plurality of branches, currents of the remaining branches of the plurality of branches and determining or correcting S26 the status of the remaining branches of the plurality of branches based on the estimated currents.

In an embodiment, the status comprises whether a branch is active or inactive.

In an embodiment, each branch comprises a first end and a second end connected to respective buses. In an embodiment, the remaining branch is determined to be active if a ratio between the estimated current and an active current assuming the remaining branch is active is above a first threshold and/or wherein the remaining branch is determined to be inactive if the ratio is below a second threshold. In an embodiment, estimating the estimated currents of the remaining branches of the plurality of branches is performed assuming an active status of the remaining branches.

As will be further described below, in case there is data on a particular branch, e.g., a PMU on said particular branch, the branch status is assumed to be "known" from the PMU and correct, hence this status will not be corrected by the algorithm.

On the other hand, statuses coming from SCADA may be considered as "suggestions" or "initial guesses". All branch statuses are available from SCADA, but due to the nature of SCADA, e.g., a lower update rate, reliability might be lower than of data coming from a PMU. Thus, the SCADA status may be used as the initial guess for branches without PMUs, and the method either confirms this status or corrects it.

In an embodiment, determining the statuses of the remaining branches is based on a linear state and topology estimation.

In an embodiment, determining the statuses of the remaining branches comprises minimising current mismatches for all buses to which at least one remaining branch is connected, respectively.

In an embodiment, the minimising is performed based on Kirchhoff's current law.

In an embodiment, determining the statuses of the remaining branches comprises a sum of squares optimisation.

In an embodiment, the method further comprises determining, based on the voltage and current values of the at least one of the plurality of branches, current and voltage values of one adjacent remaining branch connected to the at least one of the plurality of branches (method 1).

In an embodiment, the method further comprises iteratively performing determination of current and voltage values of further adjacent remaining branches based on the current and voltage values of said adjacent remaining branch. In an embodiment, said step is performed before estimating the currents of the remaining branches of the plurality of branches.

In an embodiment, the controller is a supervisory control and data acquisition, SCADA, system.

In an embodiment, the method is computer-implemented.

In an embodiment, the method further comprises generating, based on said determined status, a control signal for controlling the power grid.

The present disclosure further relates to a device for determining a status of a power grid, the device comprising at least one processor configured to perform any method described herein.

The present disclosure also relates to a computer-readable storage medium storing instructions which, when executed by a processor, configure the processor to perform any method described herein.

In the following, the presented methods will be described in more detail with reference to exemplary embodiments.

The embodiments may optionally include one or more pre-processing steps. This may help improving the accuracy of the topology detection, e.g., in case of noisy measurement data.

In particular, time-synchronised measurements can be first cleaned to remove obviously erroneous data. This can be done by, e.g., at least one of the following methods. Removing data based on the measurement quality flag, which is typically provided by the measurement devices such as PMUs, removing corrupted data such as not-a-number entries, removing measurement values that are clearly wrong, e.g., negative current and voltage magnitudes, signals show magnitudes are dozens/hundreds time larger than their usual range and cannot be attributed to abnormal operating conditions in the grid, and/or removing data based on bad data processing techniques used for state estimation in power grids.

The resulting measurement is then free of gross errors that could negatively affect the performance of the proposed topology detection methods.

To further increase the quality of the measurement data, the state estimation problem can be solved for the part of the grid with known topology. Due to measurement redundancy that usually exists in the power grid or at least part of it, the values of bus voltages and branch currents obtained as the result of state estimation may generally have smaller errors with respect to their true values than the raw measurement data.

Using the constrained formulation of state estimation based on phasor measurements, the following optimisation problem may be obtained:

$$\min \quad y_1^T W_1 y_1 + y_2^T W_2 y_2$$

$$\text{s.t. } Hv - y_1 = z_1$$

$$Y_{nz} v - y_2 = z_2$$

$$Y_z v = 0$$

Here, H is the matrix relating problem states $v$ (bus voltages) with measurements, and each row corresponds to the measurement equation of a particular device such as a line, a transformer, etc. $Y_{nz}$ is the part of bus admittance matrix corresponding to buses with nonzero, monitored bus injections, while $Y_z$ is the part of bus admittance matrix corresponding to buses with zero injections. Since the entire operational topology may not be known at this point, both $Y_{nz}$ and $Y_z$ only include rows corresponding to buses all whose adjacent branches have known statuses. $z_1$ is the vector of measurements corresponding to individual devices, while $z_2$ is the vector of measurements of total bus current injections at each monitored bus. $y_1$ and $y_2$ are measurement residuals and $W_1$ and $W_2$ are the corresponding measurement weights. Note that all values except the measurement weights are complex. The measurement weights may be proportional to the accuracy of the corresponding measurement device. That is, the weights may be used to correct potential inaccuracies of the used measurement devices/sensors/etc.

Solving the above problem, estimate values of observable bus voltages may be obtained, which can be used to compute the currents of branches that have known statuses and connect observable buses. The computed values can then be used in one of the methods described herein instead of the raw measurement data.

In an embodiment, statuses of the branches may be determined using the graph tracing method (as in method 1 above).

The general idea of this method may be to iteratively propagate the known branch statuses through the graph of the power grid model, e.g., based on the Kirchhoff's Current Law. In an embodiment, the procedure may be as follows (not including the pre-processing steps described above). Obtain vectors of known-injection buses, known bus voltages, and known branch currents, declare all PMU-monitored branches as having known statuses (also referred to as "observable").

Then, branch observability is iteratively updated until it does not change. In particular, all buses with only one adjacent unobservable branch are identified. For each of them: Compute branch current from the balance equation and compare with a threshold to decide on its status and compute current (and optionally, voltage) at the other branch end.

Subsequently, the branch observability, bus voltage and branch current values may be updated, and the process may be repeated.

Key components here may be deciding on the status of the branch based on the bus balance equation and computing the branch current and voltage on the other side of the branch. They are described below.

Deciding on branch status based on Kirchhoff's Current Law may be performed as follows.

Suppose bus $k$ has m branches connected to it, with currents $i_1, \ldots i_m$. $i_1$ unknown, while currents $i_2, \ldots, i_m$, are known. Let $i_{inj}$ denote the injection current, which is also known. From the bus balance equation given by the Kirchhoff's Current Law, the following may be obtained:

$$i_{inj} = \sum_{s=1}^{m} i_s$$

Hence, the unknown branch current can be computed from

$$i_1 = i_{inj} - \sum_{s=2}^{m} i_s$$

The computed current value can then be compared to a certain (pre-determined) threshold to determine whether the branch is in or out of service. In an embodiment, this threshold may be related to the measurement noise. If the computed current is above the sum of the expected noise components of the currents of other adjacent branches, the branch is determined to be in service. Otherwise, one cannot reliably be said whether the nonzero value of the computed branch current is due to measurement noise or because the branch is indeed in service.

There are multiple ways to compute the expected total noise in the current magnitude, one of which is based on a determination of the sum of known current magnitudes:

$$i_{\Sigma} = \left| i_{inj} \right| + \sum_{s=2}^{m} |i_s|,$$

and if $|i_i| \geq \alpha \cdot i_{\Sigma}$, then the branch is declared to be in service. Here, $\alpha$ may depend on the total vector error of current measurements and on how conservative the user wants to be about the resulting estimate. A higher value of $\alpha$ may increase the probability that the branches determined to be in service are indeed switched on. On the other hand, a higher value of $\alpha$ may reduce the number of branches for which $|i_1| \geq \alpha \cdot i_{\Sigma}$, thus fewer branch statuses may be detected. The value of $\alpha$ is thus proportional to the confidence placed in detecting in-service branches, and may be selected by a user individually.

Computing current (and voltage) at the other end of the branch may be performed as follows.

Suppose that the branch status has been determined using the bus balance equation for the sending end of the branch. Then, the current at the receiving end of the branch may be computed as a means of propagating the observability through the network graph. This can be done using a current-voltage relationship of a two-port branch model as exemplarily shown below. The exemplary model equations are given by

$$\begin{bmatrix} i_f \\ i_t \end{bmatrix} = Y_{br} \begin{bmatrix} v_f \\ v_t \end{bmatrix}, \text{ where } Y_{br} = \begin{bmatrix} (y_s + j\frac{b_c}{2})\frac{1}{\tau^2} & -y_s\frac{1}{\tau e^{-j\theta_{shift}}} \\ -y_s\frac{1}{\tau e^{j\theta_{shift}}} & y_s + j\frac{b_c}{2} \end{bmatrix}.$$

Having the values of $v_f$ and $i_f$ the corresponding values at the receiving end may be computed from the equations. If in addition the value of $v_t$ is known, the overdetermined system of equations is solved, further increasing the resulting accuracy.

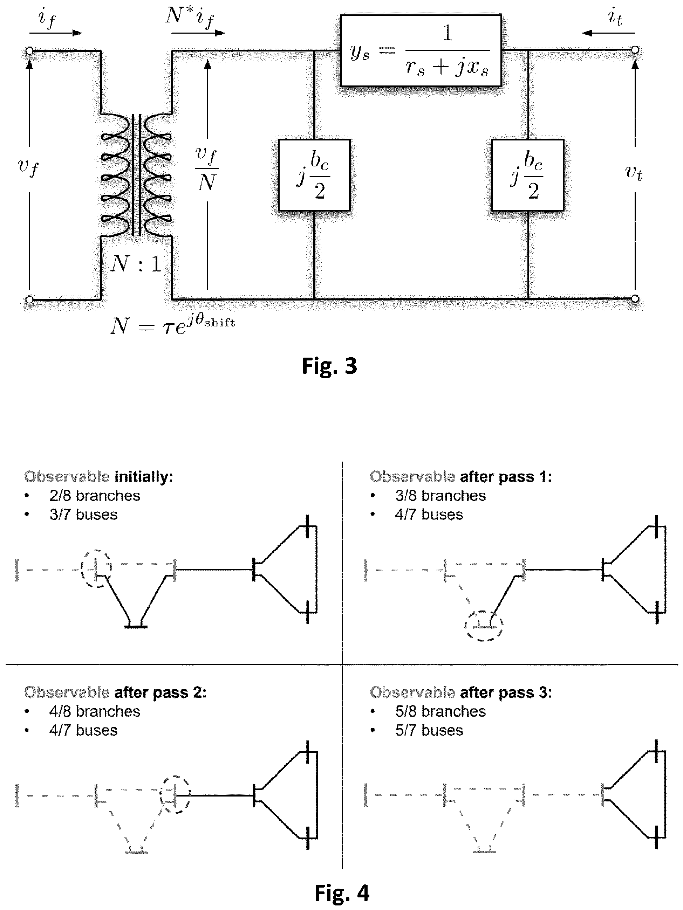

An example of how the observability of branch statuses is propagated through the network graph according to an embodiment of the present disclosure is exemplarily shown in Fig. 4, in which all bus injections are assumed to be monitored. Observable elements are shown by dashed lines and unobservable elements are shown in solid lines. This method may be performed extremely fast as it does not require any large-scale matrix-vector computations and its complexity is linear with respect to the system size.

As can be seen from Fig. 4, after three steps, the number of observable branches may be increased from 2 to 5 by using the above method.

However, there may be some limitations to the graph-tracing method. It may generally require decent PMU penetration to be able to propagate branch observability successfully. Further, it may not be able recover branch statuses when more than one branch with unknown status is connected to a bus (or when the bus injection is unknown, see last step in Fig. 4).

Throughout this disclosure, a power grid is assumed having a plurality of branches. A branch is generally connected between two buses. However, the present disclosure can be applied to any power grid. The grid model may be known in advance.

The current and voltage values/measurements may be obtained from at least one sensor and/or PMU and/or by estimation.

To further improve monitoring of branch statuses, the following embodiment is presented which is fully compatible with the above.

In particular, in order to overcome the above limitations, an optimisation-based procedure is proposed. Said procedure may aim at determining all unknown statuses simultaneously rather than one by one. This may refer to method 2 outlined above.

The method according to an embodiment may comprise the following.

The state estimation problem for the part of grid with known topology (which can be done as part of the pre-processing step) may be solved and voltages and branch currents obtained after the estimation may be recorded. For the branches with unknown status but with known voltages on both sides, the currents $i_f$ and $i_t$ that would be flowing at the sending and receiving end of the branch if it was on are determined.

The objective of the topology estimation problem according to an embodiment is to minimise the sum of squared current mismatches at buses that have adjacent branches with unknown statuses. Unlike in Method 1 discussed above, there is no limitation on how many branches with unknown statuses can be connected to a bus. In the present embodiment, the bus voltages and branch currents obtained during the initial state estimation are treated as constants. Further, the currents of branches with unknown statuses are variable and are determined by solving the optimisation problem.

There may be two types of the optimisation variables for each branch with an unknown status.

If the voltages at both branch ends are known, the branch status $s \in \mathbb{R}$ is considered a variable. Since the values of the current at both ends of the branch was determined assuming that it was in service, the actual current values are given by $s \cdot i_f$ and $s - i_t$.

If the voltage for at least one branch end is unknown, the branch series current $i_s \in \mathbb{C}$ is considered a variable. The current through the shunt admittance of the branch may be neglected in this case.

The resulting optimisation problem represents constrained least squares in complex variables, which makes the solution procedure fast and extremely reliable. Solving it yields the value of s or $i_s$ for each branch with an unknown status.

The branch status may be determined as follows.

If s is the variable, it is determined whether it is closer to 0 or 1. If s > 0.5, the branch is considered to be in service, otherwise it is considered to be out of service.

The distance to 0 or 1 may be inversely proportional to the confidence value of the estimated status. Alternatively, the interval $[\alpha, 1 - \alpha]$ can be set to represent the uncertainty set, i.e., when s belongs to this interval, the status is unrecoverable.

If $i_s$ is the variable, its absolute value is compared with a predefined threshold. If it is above the threshold, the branch is considered to be in service (with the confidence increasing with the absolute value $|i_s|$). If it is below the threshold, either the branch is deemed out of service, or its status is deemed unrecoverable because it is impossible to tell whether a small nonzero value of the current is due to noise or is indeed an operational point of the grid.

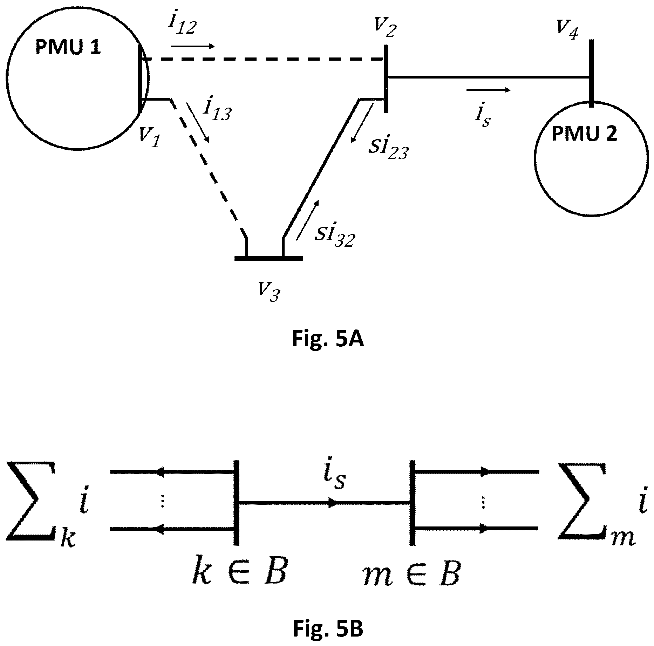

In summary, referring to the exemplary schematic depiction in Fig. 5, the method may comprise the following.

As a pre-processing step, an initial state estimation for the known-topology subgrid may be performed by solving

$$min \; y_1^T W_1 y_1 + y_2^T W_2 y_2,$$

s.t. $Hv - y_1 = z_1$ (measurement equations)

$Y_{nz}v - y_2 = z_2$ (bus balances for $i_{inj} \neq 0$) and

$Y_z v = 0$ (bus balances for $i_{inj} = 0$).

Subsequently, the estimated voltages $v^{in}$ and branch currents $i^{in}$ (on both ends) are recorded.

For any branch with unknown status between two buses with known v, the currents $i_f^{in}, i_t^{in}$ are determined assuming that the branch is "on".

The estimation processing is, according to an embodiment, performed as follows.

A set of known injection buses B is considered and, for unknown status branches between known-v buses, status variables s are defined. For branches connected to unknown-v bus(es), current variables $i_s$ ("slack" variables) are defined.

Subsequently, an optimisation problem minimising bus current mismatches for buses in B is solved:

$$min \; y_1^T W_1 y_1 + y_2^T W_2 y_2 + \beta(s^t s + i_s^T i_s),$$

s.t. $C_1 i_s + D_1 s - y_1 = z_2 - Y_{nz} v^{in}$

$$C_2 i_s + D_2 s - y_2 = -Y_z v^{in}$$

C and D may be constant matrices that map unknown currents and branch statuses to the bus current injections. $\beta$ may be referred to as a weight coefficient (typically a small value) in front of the penalty term in the objective, which may be used to ensure the solvability of the optimisation problem. $z_1$ and $z_2$ may be vectors of complex measurements and $y_1$ and $y_2$ may be variables that represent residuals of measurement equations. $Y_{nz}$ and $Y_z$ may denote parts of the network admittance matrix that correspond to nonzero and zero injection buses, respectively.

The thus obtained values of s and $i_s$ are then recorded.

Thereafter, the obtained values are analysed as follows.

In particular, for each branch defined through the variable s, it is determined whether $s > \alpha$ (branch is considered to be "on") or whether $s < (1 - \alpha)$ (branch is considered to be "off", wherein $\alpha$ is a predetermined threshold. In an example, $0.1 < \alpha < 0.3$, e.g., $\alpha = 0.2$.

In case s does not fulfil any of the above conditions, the status is deemed to be unrecoverable.

For each branch defined through the variable $i_s$, the following is considered.

If $\left| i_s^{km} \right| > \gamma \max\{\sum_k |i|, \sum_m |i|\}$, the branch is considered to be "on". Otherwise, the status is deemed to be unrecoverable. In the above, the indices $k$ and $m$ denote the injection buses, wherein $k \in B, m \in B$. Fig. 5B is a schematic depiction of the bus structure.

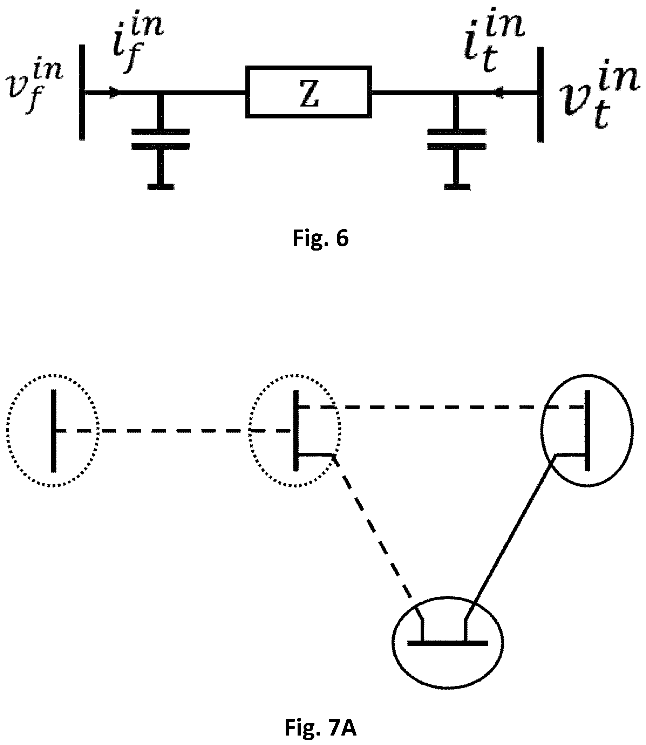

The above procedure will be further described with reference to Fig. 6 showing a simplified depiction of a grid. Therein, PMU refers to a phasor measurement unit, $i_x$ denotes a current, $v_x$ denotes a voltage and s the branch status. The index $_x$ indicates the bus. Branches for which the status is known are depicted with dashed lines.

In Fig. 5, PMU1 may provide $\bar{v}_1, \bar{\imath}_{12}, \bar{\imath}_{13}$ and $\bar{\imath}_1^{inj}$, while PMU may provide $\bar{\imath}_4^{inj}$. Further, it is assumed that buses 2 and 3 have zero injections and that the injection of bus 4 is known.

An initial linear state estimation (LSE) may be performed as follows.

$$min \; y_1^2 + y_2^2 + y_3^2 + y_4^2,$$

$$\text{s.t. } v_1 - y_1 = \bar{v}_1,$$

$$Y_{12}^{br} \begin{bmatrix} v_1 \\ v_2 \end{bmatrix} - y_2 = \bar{\imath}_{12},$$

$$Y_{13}^{br} \begin{bmatrix} v_1 \\ v_3 \end{bmatrix} - y_3 = \bar{\imath}_{13}.$$

Further, bus 1 balance may be expressed as

$$Y_{12}^{br} \begin{bmatrix} v_1 \\ v_2 \end{bmatrix} + Y_{13}^{br} \begin{bmatrix} v_1 \\ v_3 \end{bmatrix} - y_4 = \bar{\imath}_1^{inj}.$$

As a result $v_1^{in}, v_2^{in}$ and $v_3^{in}$ are obtained. Further, $i_{12}^{in}, i_{23}^{in}, i_{13}^{in}, i_{21}^{in}, i_{32}^{in}$ and $i_{31}^{in}$ can be determined.

The bus current mismatch minimisation may be performed as follows.

$$min \; y_1^2 + y_2^2 + y_3^2 + \beta(s^2 + i_s^2),$$

$$\text{s.t. } s i_{23}^{in} + i_s = -i_{31}^{in},$$

$$-i_s = \bar{\imath}_4^{inj}$$

Thereby, s and $i_s$ may be obtained.

The branch status 2-3 (i.e., between buses 2 and 3) may be determined as "off" in case $s < 0.2$ and as "on" in case $s > 0.8$. Otherwise, the status may be determined as being unknown. The threshold 0.2 is merely an example and not to be understood as limiting.

The status of branch 2-4, for $\gamma$ = 0.02 (taken here as an exemplary value only), can be determined as follows.

As used herein, $\gamma$ may be a coefficient that maps the measured magnitude of a certain current to its maximum expected measurement error due to noise. The value may potentially include some safety margin.

If $s < 0.02 \max \left\{ |i_{21}| + |i_{23}|, \left| i_4^{-inj} \right| \right\}$, the branch is determined to be "off". Otherwise, the status is considered to be unknown.

Often, the size of the topology detection problem to be solved is smaller than the size of the state estimation problem itself, which makes this method particularly attractive when low computation time is imperative and when only a small percentage of branches have unknown statuses. In addition, this method does not require any input from the SCADA system.

The present disclosure further relates to an optimisation-based procedure with SCADA input. This embodiment may also refer to method 3 as outlined above. The prerequisites are similar to the embodiment above and will thus not be fully repeated.

As noted above, branch statuses coming from a SCADA system are generally trustworthy but may not be up to date due to their lower update rate. However, they can be taken as a basis for further analysis of the branch status.

That is, the topology detection procedure can be further improved by utilising the available SCADA statuses as the initial guess for the true branch statuses. Similar to the above method without SCADA input, an optimisation-based procedure is presented that aims at determining all unknown statuses simultaneously.

The two main steps are solving a state estimation problem for the part of grid with known topology (which can be done as part of the pre-processing step as outlined above) and recording voltages and branch currents obtained after the estimation, and solving the combined state and topology estimation problem, whose objective is to minimise the sum of squares of measurement residuals for individual measurements as well as for current bus balance equations.

Unlike in the above method (method 2), bus voltages are treated as variables in this problem. The series currents $i_s$ of branches with unknown statuses are also treated as variables, while the shunt currents on such branches are neglected to preserve the linearity of the optimisation problem. If for a given branch the SCADA status is "in service", this branch is added to the bus admittance matrix. Otherwise, the admittance matrix does not include this branch. This formulation means that the variables modelling series currents of unknown-status branches can be viewed as slack variables that model the deviations of the actual branch current (and hence, status) from the value it would have if the SCADA system were blindly trusted.

As in method 2, the resulting optimisation problem according to this embodiment represents constrained least squares in complex variables, which makes the solution procedure fast and extremely reliable. Solving it yields the value of $i_s$ for each branch with an unknown status. To determine the branch status, we first compute the value of the series current through the branch if the branch was on, denoted by $i_v$. Note that for this computation, whenever possible, the voltages determined as the result of the initial state estimation problem are used. Otherwise, there is a risk of biasing the voltage values by variable statuses. The branch status is then determined as follows:

If $|i_s| > |i_v|$, the SCADA status is wrong and should be corrected.

If $|i_s| < |i_v|$, the SCADA status is correct.

The ratio between the larger and the smaller current may be proportional to the confidence of the estimated status. Alternatively, the interval $[\alpha, 1 - \alpha]$ may be set to represent the uncertainty set. I.e., if $|i_s|/|i_v|$ belongs to this interval, the status is deemed to be unrecoverable.

An exemplary procedure according to this embodiment may be performed as follows.

In a pre-processing step, an initial state estimation for the known-topology subgrid is performed by solving

$$ min \; y_1^T W_1 y_1 \; + \; y_2^T W_2 y_2 $$

s.t. $Hv - y_1 = z_1$ (measurement equations)

$Y_{nz}v - y_2 = z_2$ (bus balances for $i_{inj} \neq 0$) and

$Y_z v = 0$ (bus balances for $i_{inj} = 0$).

Subsequently, the estimated voltages $v^{in}$ are recorded.

In an embodiment, only bus balances for which all branch statuses are known are included. This is exemplarily shown in Fig. 7A, where buses encircled by dotted lines denote buses for which balances are included and buses encircled by solid lines denote buses for which balances are excluded.

For the estimation process described below, it is assumed that unknown branch statuses are equal to the values coming from the SCADA. Further, for each such (unknown) branch, a current variable $i_s$ ("slack" current variable) is introduced. Said current variable $i_s$ is used to model the possibility of the SCADA branch status being erroneous.

Subsequently, an augmented LSE problem with the current variable $i_s$ entering corresponding bus balances is solved:

$$min\ y_1^T W_1 y_1 + y_2^T W_2 y_2 + \beta i_s^T i_s$$

$$\text{s.t. } Hv - y_1 = z_1$$

$$Y_{nz} v + C_1 i_s - y_2 = z_2$$

$$Y_z v + C_2 i_s = 0.$$

The obtained current variables $i_s$ are recorded.

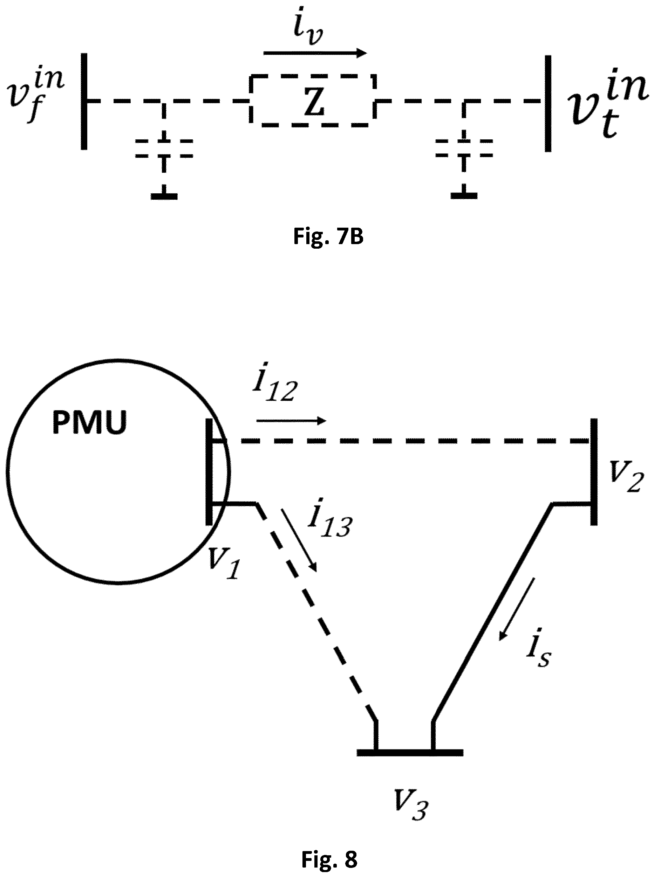

Then, for each branch with unknown status, its series current $i_v$ is determined from $v^{in}$ assuming the branch is "on". Fig. 7B shows a respective equivalent circuit.

There, the following applies:

$$i_v = \frac{v_f^{in} - v_t^{in}}{Z}$$

With the results from the above considerations, the absolute values $|i_v|$ and $|i_s|$ are compared. If $|i_s| > \alpha |i_v|$, the SCADA status is considered to be erroneous and will be corrected, and if $|i_s| < (1 - \alpha)|i_v|$, the SCADA status is considered to be correct.

In an embodiment, $0.5 < \alpha < 1$, preferably, $0.7 < \alpha < 0.9$, and for example, $\alpha = 0.8$.

The closer the value of $\alpha$ is to 1, the more confidence is required for declaring whether the branch is on or off. Vice versa, the closer the value of $\alpha$ is to 0.5, the lower the confidence of the final result.

The above will be further described exemplarily referring to Fig. 8.

The PMU may provide $\bar{v}_i, \bar{\iota}_{12}, \bar{\iota}_{13}$ and $\bar{\iota}_1^{inj}$. Further, it is assumed that buses 2 and 3 have zero injections. The SCADA status for branch 2-3 is "on".

An initial linear state estimation (LSE) may be performed as follows.

$$min\ y_1^2 + y_2^2 + y_3^2 + y_4^2,$$

$$\text{s.t. } v_1 - y_1 = \bar{v}_1,$$

$$Y_{12}^{br} \begin{bmatrix} v_1 \\ v_2 \end{bmatrix} - y_2 = \bar{\iota}_{12},$$

$$Y_{13}^{br} \begin{bmatrix} v_1 \\ v_3 \end{bmatrix} - y_3 = \bar{\iota}_{13}.$$

Further, bus 1 balance may be expressed as

$$Y_{12}^{br} \begin{bmatrix} v_1 \\ v_2 \end{bmatrix} + Y_{13}^{br} \begin{bmatrix} v_1 \\ v_3 \end{bmatrix} - y_4 = \bar{\iota}_1^{inj}.$$

As a result, $v_1^{in}$, $v_2^{in}$ and $v_3^{in}$ are obtained. Further, the branch current 2-3 can be determined by solving

$$i_{23}^v = \frac{v_2^{in} - v_3^{in}}{z_{23}} \, .$$

The augmented LSE can be formulated as:

$$min \; y_1^2 + \; y_2^2 + \; y_3^2 + \; y_4^2,$$

$$\text{s.t. } v_1 - \; y_1 = \; \bar{v}_1,$$

$$Y_{12}^{br} \begin{bmatrix} v_1 \\ v_2 \end{bmatrix} - \; y_2 = \; \bar{\imath}_{12},$$

$$Y_{13}^{br} \begin{bmatrix} v_1 \\ v_3 \end{bmatrix} - \; y_3 = \; \bar{\imath}_{13}.$$

The bus balances can be expressed by

$$Y_{12}^{br} \begin{bmatrix} v_1 \\ v_2 \end{bmatrix} + Y_{13}^{br} \begin{bmatrix} v_1 \\ v_3 \end{bmatrix} - \; y_4 = \; \bar{\imath}_1^{inj}$$

$$Y_{21}^{br} \begin{bmatrix} v_2 \\ v_1 \end{bmatrix} + Y_{23}^{br} \begin{bmatrix} v_2 \\ v_3 \end{bmatrix} + \; i_s = 0$$

$$Y_{31}^{br} \begin{bmatrix} v_3 \\ v_1 \end{bmatrix} + Y_{32}^{br} \begin{bmatrix} v_3 \\ v_2 \end{bmatrix} - \; i_s = 0$$

With the above, the current $i_s$ is obtained.

By considering the absolute value of $i_s$, the current branch status can be determined and, if necessary, corrected. Herein, $\alpha = 0.8$ as an example.

If $|i_s| < 0.2|i_{23}^v|$, the branch 2-3 is "on".

If $|i_s| > 0.8|i_{23}^v|$, the branch 2-3 is "off".

Otherwise, the status of the branch 2-3 cannot be recovered.

It is to be noted that, irrespective of the used method (disclosed herein or known from the prior art), it may not be possible to recover a branch status if parallel branches have an unknown status and are connected to at least one bus with an unknown voltage or when a branch with an unknown status is connected to two buses with unknown bus current injections.

The methods presented herein may be based on techniques of convex optimisation, which guarantee not only reliable performance but also high computational efficiency. The main advantages are that the topology estimation based on graph tracing is formulated in such a way as to guarantee the correct identification of in-service branches and the presented optimisation-based methods rely on the solution of a convex, linearly constrained least-squares problem, which guarantees the recovery of the globally optimal solution and is computationally efficient and reliable.

Further, the optimisation-based methods can help recover the statuses of virtually all branches in the grid, even when the PMU penetration rate is relatively low.

Further, according to an embodiment, the method contains a special procedure for utilising branch statuses from SCADA, which treats them as an initial guess for the true statuses but allows this initial guess to be overridden by the output of the optimisation problem. If a majority of SCADA statuses are correct, which is the case in practice, the algorithm's accuracy is increased.

A corresponding confidence value may be computed for each estimated status to aid the system operator in understanding which recovered statuses are more / less trustworthy.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analogue implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organisation.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1.   Method for determining a status of a power grid, wherein the power grid comprises a plurality of branches each connected between two buses, the method comprising:

    obtaining (S11) current measurements of at least one of the plurality of branches,
    obtaining (S12) a grid model, the model comprising the plurality of branches and buses,
    estimating (S13), using the grid model and the current measurements, a voltage value of at least one of the plurality of buses,
    determining (S14), using the voltage values and current measurements, current estimates of remaining branches of the plurality of branches having an unknown status, and
    determining (S15) the status of the remaining branches of the plurality of branches based on the estimated currents.

2.   Method according to claim 1, wherein the status comprises whether a branch is active or inactive, wherein particularly, the status is a binary variable.

3.   Method according to claim 1 or 2, wherein each branch comprises a first end and a second end connected to respective buses, and
    wherein, in case voltage values at the first end and the second end of one of the remaining branches are known, the status of said remaining branch is determined based on a current which is determined assuming said remaining branch is active.

4.   Method according to claim 3, wherein the status of the remaining branch is determined to be active if the ratio is above a first threshold, and/or wherein the remaining branch is determined to be inactive if the ratio is below a second threshold.

5.   Method according to claim 1 or 2, wherein each branch comprises a first end and a second end connected to respective buses, and
    wherein, in case a voltage value of the first end or the second end of one of the remaining branches is unknown, the status of said remaining branch is determined based on an absolute value of the estimated current of said remaining branch.

6.   Method according to claim 5, wherein the remaining branch is determined to be active if the absolute current value is above a third threshold.

7.   Method according to any one of claims 1 to 6, wherein estimating the estimated currents of the remaining branches of the plurality of branches is performed assuming an active status of the remaining branches.

8.   Method according to any one of claims 1 to 7, wherein determining the statuses of the remaining branches is based on a linear state estimation.

9.   Method according to any one of claims 1 to 8, wherein determining the statuses of the remaining branches comprises minimising current mismatches for all buses to which at least one remaining branch is connected, respectively,

wherein particularly, the minimising is performed based on Kirchhoff's current law.

10. Method according to any one of claims 1 to 9, wherein determining the statuses of the remaining branches comprises a sum of squares optimisation.

11. Method according to any one of claims 1 to 10, the method further comprising:
determining, based on the voltage and current values of the at least one of the plurality of branches, current and voltage values of one adjacent remaining branch connected to the at least one of the plurality of branches.

12. Method according to claim 11, further comprising iteratively performing determination of current and voltage values of further adjacent remaining branches based on the current and voltage values of said adjacent remaining branch, wherein particularly, the step is performed before determining the current estimates of the remaining branches of the plurality of branches.

13. Method according to any one of claims 1 to 12, wherein the method is computer-implemented.

14. Method according to any one of claims 1 to 13, further comprising generating, based on said determined status, a control signal for controlling the power grid.

15. Device for determining a status of a power grid, the device comprising at least one processor configured to perform the method according to any one of claims 1 to 14.

S11 obtaining current measurements of at least one of the plurality of branches

S12 obtaining a grid model, the model comprising the plurality of branches and buses

S13 estimating, using the grid model and the current measurements, a voltage value of at least one of the plurality of buses

S14 determining, using the voltage values and current measurements, current estimates of remaining branches of the plurality of branches having an unknown status

S15 determining the status of the remaining branches of the plurality of branches based on the estimated currents

**Fig. 1**

S21 obtaining current measurements of at least one of the plurality of branches

S22 obtaining a grid model, the model comprising the plurality of branches and buses

S23 estimating, using the grid model and the current measurements, a voltage value of at least one of the plurality of buses

S24 obtaining, from a controller, at least one parameter of at least one of remaining branches of the plurality of branches

S25 determining, based on the at least one parameter and current measurements of the at least one of the plurality of branches, currents of the remaining branches of the plurality of branches

S26 determining or correcting the status of the remaining branches of the plurality of branches based on the estimated currents

**Fig. 2**

$$y_s = \frac{1}{r_s + jx_s}$$

$$N = \tau e^{j\theta_{\text{shift}}}$$

**Fig. 3**

Observable **initially:**
- 2/8 branches
- 3/7 buses

Observable **after pass 1:**
- 3/8 branches
- 4/7 buses

Observable **after pass 2:**
- 4/8 branches
- 4/7 buses

Observable **after pass 3:**
- 5/8 branches
- 5/7 buses

**Fig. 4**

**Fig. 5A**

**Fig. 5B**

**Fig. 6**

**Fig. 7A**

$$i_v$$

$$v_f^{in}$$ — Z — $$v_t^{in}$$

**Fig. 7B**

PMU

$$i_{12}$$

$$V_2$$

$$V_1$$

$$i_{13}$$

$$i_s$$

$$V_3$$

**Fig. 8**

# EUROPEAN SEARCH REPORT

**Application Number**

EP 24 20 9045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/262001 A1 (SUN HONGBO [US] ET AL) 3 October 2013 (2013-10-03) * figures 1-5 * * paragraph [0021] - paragraph [0098] * | 1-15 | INV. H02J13/00 |
| A | HAUGHTON DANIEL A ET AL: "A Linear State Estimation Formulation for Smart Distribution Systems", IEEE TRANSACTIONS ON POWER SYSTEMS, IEEE, USA, vol. 28, no. 2, 1 May 2013 (2013-05-01), pages 1187-1195, XP011532449, ISSN: 0885-8950, DOI: 10.1109/TPWRS.2012.2212921 [retrieved on 2013-04-18] * figure 1 * * Sections II-IV * | 1-15 | |
| A | RAGHURAMAN S ET AL: "A survey on state estimation techniques in electrical power system", RECENT ADVANCEMENTS IN ELECTRICAL, ELECTRONICS AND CONTROL ENGINEERING (ICONRAEECE), 2011 INTERNATIONAL CONFERENCE ON, IEEE, 15 December 2011 (2011-12-15), pages 199-205, XP032096121, DOI: 10.1109/ICONRAEECE.2011.6129763 ISBN: 978-1-4577-2146-5 * Section 2 * | 1-15 | TECHNICAL FIELDS SEARCHED (IPC) H02J |

The present search report has been drawn up for all claims

| Place of search | Date of completion of the search | Examiner |
|---|---|---|
| Munich | 8 April 2025 | Chabas, Julien |

## ANNEX TO THE EUROPEAN SEARCH REPORT
## ON EUROPEAN PATENT APPLICATION NO.

EP 24 20 9045

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2025

| Patent document cited in search report | Publication date | Patent family member(s) | Publication date |
|---|---|---|---|
| US 2013262001 A1 | 03-10-2013 | JP 2013208051 A | 07-10-2013 |
| | | US 2013262001 A1 | 03-10-2013 |

For more details about this annex : see Official Journal of the European Patent Office, No. 12/82